# EUROPEAN PATENT APPLICATION

(11) **EP 4 498 468 A1**
(43) Date of publication of application: **29.01.2025**
(21) Application number: 23863484.4
(22) Date of filing: 06.09.2023
(51) Int. Cl.: H01M 10/058, H01M 50/451, H01M 50/489, H01M 50/46, H01M 10/0569, H01M 10/052

(54) **ELECTRODE ASSEMBLY AND LITHIUM SECONDARY BATTERY**

(30) Priority: 06.09.2022 KR 20220113106; 05.09.2023 KR 20230117680
(71) Applicant: LG Energy Solution, Ltd., Seoul 07335 (KR)
(72) Inventor: SOON, Jiyong, Daejeon 34122 (KR); KIM, Minkyung, Daejeon 34122 (KR); KIM, Hyosik, Daejeon 34122 (KR); JUN, Youngjin, Daejeon 34122 (KR); JUNG, Hyeri, Daejeon 34122 (KR); YOON, Jong Keon, Daejeon 34122 (KR); KANG, Sungjoong, Daejeon 34122 (KR); KIM, Dong Kyu, Daejeon 34122 (KR)
(74) Representative: Goddar, Heinz J.
(86) International application number: PCT/KR2023/013296
(87) International publication number: WO 2024/054017

(57) **Abstract**

An electrode assembly according to the present disclosure includes a positive electrode, a negative electrode, a separator that is disposed between the positive electrode and the negative electrode, and a coating layer that is formed on one surface of the separator, wherein a 90° peel strength between the separator and the coating layer measured at 60°C is 30 gf/25mm to 140 gf/25mm.

## Description

### [TECHNICAL FIELD]

### Cross Citation with Related Application(s)

This application claims the benefit of Korean Patent Application No. 10-2022-0113106 filed on September 6, 2022 and Korean Patent Application No. 10-2023-0117680 filed on September 5, 2023 in the Korean Intellectual Property Office, the disclosure of which is incorporated herein by reference in its entirety.

The present disclosure relates to an electrode assembly and a lithium secondary battery.

### [BACKGROUND]

As the development of a technology and the demand for an electric vehicle and an energy storage system (ESS) have increased, the demand for a battery as an energy source has rapidly increased, and accordingly, various research into batteries capable of satisfying various needs has been carried out. Particularly, as a power source for such devices, research into lithium secondary batteries having excellent life and cycle characteristics as well as high energy density has been actively conducted.

Generally, a lithium secondary battery includes a positive electrode, a negative electrode, a separator interposed between the positive electrode and the negative electrode, an electrolyte, and the like. Since the positive electrode can generate oxygen due to its unstable structure in a charged state, and there is a high danger of ignition when oxygen is generated, attempts has been made to research and develop a method capable of enhancing the safety of lithium secondary batteries.

A separator is used to ensure electrical insulation between a positive electrode and a negative electrode, and a thin film made of polyolefin is generally used. However, a polyolefin-based separator can easily shrink in high temperature environments and thus fail to insulate between a positive electrode and a negative electrode. When electrical insulation between the positive electrode and the negative electrode becomes impossible, a short circuit may occur, which may interact with oxygen generated by the unstable positive electrode to cause ignition. In other words, when a short circuit occurs in a charged lithium secondary battery in a high-temperature environment, there is a problem that the lithium secondary battery ignites.

Therefore, there is a demand to develop a technique relating to a method capable of enhancing the high-temperature safety of a lithium secondary battery.

### [DETAILED DESCRIPTION OF THE INVENTION]

### [Technical Problem]

Present disclosure provides an electrode assembly that improves the high-temperature stability of a lithium secondary battery and also maintains excellent electrochemical properties, and a lithium secondary battery including the same.

### [Technical Solution]

According to one embodiment of the present disclosure, there is provided an electrode assembly comprising: a positive electrode, a negative electrode, a separator that is disposed between the positive electrode and the negative electrode, and a coating layer that is formed on one surface of the separator and contains polymer particles or ceramic particles having an absolute value of zeta potential of 25 mV or more, wherein a 90° peel strength between the separator and the coating layer measured at 60°C is 30 gf/25mm to 140 gf/25mm.

In the electrode assembly, the coating layer may make direct contact with the positive electrode.

In the electrode assembly, the ratio D₁/D₂ of the thickness (D₁) of the coating layer to the thickness (D₂) of the separator may be 0.1 to 4.

In the electrode assembly, the thickness (D₁) of the coating layer may be 30 *µ*m or less.

In the electrode assembly, the thickness (D₂) of the separator may be 5 *µ*m to 20 *µ*m.

In the electrode assembly, the polymer particles having an absolute value of zeta potential of 25 mV or more may comprise at least one selected from the group consisting of polyethylene oxide(PEO), polyphenylene sulfide(PPS), polyalkyl(meth)acrylate, polystyrene, polyvinyl chloride, polycarbonate, polysulfone, polyethersulfone, polyetherimide, polyphenylsulfone, polyamideimide, polyimide, polybenzimidazole, polyether ketone, polyphthalamide, polybutylene terephthalate, and polyethylene terephthalate.

Further, the ceramic particles may comprise at least one selected from the group consisting of boehmite (γ-AlO(OH)), Al₂O₃, TiO₂, Fe₂O₃, SiO₂, ZrO₂, Co₃O₄, SnO₂, NiO, ZnO, V₂O₅, MnO, LAGP (lithium aluminum germanium phosphate)-**based compound,** LLZO (lithium lanthanum zirconium oxide)-based compound, LATP (lithium aluminum titanium phosphate)-based compound, LLZTO (lithium lanthanum zirconium tantalum oxide)-based compound, LLTO (lithium lanthanum titanium oxide)-based compound, LSTP (lithium silicon titanium phosphate)-based compound, LGPO (lithium germanium phosphate)-based compound, and lithium oxide (e.g. Li₂O).

The polymer particles or the ceramic particles may have an average particle size (D₅₀) of 300nm to 3 *µ*m. Further, the coating layer may comprise a polymer binder, and the polymer particles or ceramic particles dispersed on the polymer binder, wherein the coating layer may comprise the polymer binder : the polymer particles or ceramic particles in a weight ratio of 1:9 to 5:5.

According to another embodiment of the present disclosure, there is provided a lithium secondary battery comprising: the above-mentioned electrode assembly, and a flame-retardant electrolyte containing a flame retardant solvent and a lithium salt having a flash point of 100°C or more, or having no flash point.

In this case, the flame retardant solvent may comprise at least one organic solvent having a functional group selected from the group consisting of a sulfone-based functional group, a fluorine-containing functional group, a phosphorus-containing functional group, and a nitrile-based functional group, and more particularly, the flame retardant solvent may comprise at least one organic solvent selected from the group consisting of a sulfone-based compound, a nitrile-based compound, a phosphoric acid-based compound, and a fluorine-substituted carbonate-based compound.

### [Advantageous Effects]

In the case of the electrode assembly according to the present disclosure, the 90° peel strength between the separator and the coating layer measured at 60°C is 30 to 140 gf/25mm. When the adhesive force between the separator and the coating layer satisfies the above range, the separator bonded to the coating layer does not easily shrink even in a high temperature environment and thus, a short circuit between the positive electrode and the negative electrode is prevented, which can improve high-temperature safety of a lithium secondary battery. In addition, when the adhesive force between the separator and the coating layer satisfies the above range, the pores in the separator become excessively clogged with particles contained in the coating layer, thereby being able to minimize problems of decreasing the lithium ion conductivity at the interface between the separator and the coating layer, and of increasing the cell resistance.

In addition, since the polymer particles and/or ceramic particles contained in the coating layer have a relatively higher melting point than polyolefin-based polymers, the coating layer containing the particles does not easily heat-shrink even at high temperatures. Therefore, the coating layer suppresses heat shrinkage of the separator, and thus, a short circuit between the positive electrode and the negative electrode at high temperatures is prevented, which can improve high-temperature safety of a lithium secondary battery.

On the other hand, when a flame retardant electrolyte is used to ensure high temperature safety of the lithium secondary battery, the flame retardant electrolyte has a problem in that it has low impregnability into polyolefin-based separator, resulting in reduction of lithium ion mobility in the separator. However, when the coating layer formed on the separator of the present disclosure contains polymer particles and/or ceramic particles having an absolute value of zeta potential of 25 mV or more, the coating layer is easily impregnated with a flame-retardant electrolyte, thereby ensuring lithium ion mobility.

### [BRIEF DESCRIPTION OF THE DRAWINGS]

FIG. 1 is a graph showing voltage-temperature changes over time of the lithium secondary battery manufactured in Example 1;
FIG. 2 is a graph showing voltage-temperature changes over time of the lithium secondary battery manufactured in Example 2;
FIG. 3 is a graph showing voltage-temperature changes over time of the lithium secondary battery manufactured in Example 3;
FIG. 4 is a graph showing voltage-temperature changes over time of the lithium secondary battery manufactured in Example 4;
FIG. 5 is a graph showing voltage-temperature changes over time of the lithium secondary battery manufactured in Comparative Example 1;
FIG. 6 is a graph showing voltage-temperature changes over time of the lithium secondary battery manufactured in Comparative Example 2;
FIG. 7 is a graph showing voltage-temperature changes over time of the lithium secondary battery manufactured in Comparative Example 3;
FIG. 8 is a graph showing voltage-temperature changes over time of the lithium secondary battery manufactured in Comparative Example 4; and
FIG. 9 is a graph showing voltage-temperature changes over time of the lithium secondary battery manufactured in Comparative Example 5.

### [DETAILED DESCRIPTION OF THE EMBODIMENTS]

Advantages and features of the present disclosure and methods of accomplishing the same may be understood more readily by reference to the following detailed description of preferred embodiments and the accompanying drawings. The present disclosure may, however, be embodied in many different forms and should not be construed as being limited to the embodiments set forth herein. Rather, such embodiments are provided so that this disclosure will be thorough and complete and will fully convey the concept of the invention to those skilled in the art, and the present disclosure will only be defined by the appended claims. The same reference numerals will be used throughout to designate the same or like elements.

Unless defined otherwise, all terms (including technical and scientific terms) used herein may be used as meanings that can be commonly understood by those of ordinary skill in the art to which the present disclosure belongs. In addition, terms defined in a commonly used dictionary are not interpreted ideally or excessively unless specifically explicitly defined.

The terms used herein are provided to describe the embodiments but not to limit the inventive concept. In the specification, the singular forms include plural forms unless the context clearly indicates otherwise. The terms "comprises" and/or "comprising" used herein does not exclude the existence or the addition of one or more elements other than those mentioned.

Further, throughout the description, when a portion is referred to as "including" or "comprising" a certain component, it means that the portion can further include other components, without excluding the other components, unless otherwise stated.

The term "and/or" as used in a phrase such as "A and/or B" herein is intended to include "A" (alone), or "B" (alone), or "both A and B,".

As used herein, the term "%" means wt.% unless explicitly indicated otherwise.

As used herein, the D₅₀ means particle sizes at which cumulative volumes of particles reach 50% in the particle size distribution curve of the particles. The D₅₀ can be measured using, for example, a laser diffraction method. The laser diffraction method can generally measure particle sizes ranging from a submicron range to several millimeters, and can obtain results with high reproducibility and high resolvability.

As used herein, the 90° peel strength between the separator and the coating layer is measured through the procedure in which a separator in which a coating layer is formed on one surface thereof is prepared to a width of 25 mm, then a double-sided tape is attached to a slide glass, rolling is performed twice with a 2 kg roller, and the average value of 90° peel strength is measured while peeling off the coating layer from the separator at a speed of 300 mm/min at a separation distance of 90 mm from the separator under a temperature condition of 60°C.

As used herein, the " ζ potential (zeta potential)" is the index indicating the degree of surface charge of the particles. The zeta potential of particles in the present disclosure can be measured, for example, by an electrophoretic light scattering method using a dynamic light scattering device. Specifically, the zeta potential value of the polymer particles or ceramic particles can be measured by an electrophoretic light scattering method after the polymer particles are dispersed in water or an alcohol-based solvent without a dispersant,

Now, embodiments of the present disclosure will be described in detail.

### <Electrode Assembly>

An electrode assembly according to an embodiment of the present disclosure comprises a positive electrode, a negative electrode, a separator that is disposed between the positive electrode and the negative electrode, and a coating layer that is formed on one surface of the separator and contains polymer particles or ceramic particles having an absolute value of zeta potential of 25 mV or more, wherein a 90° peel strength between the separator and the coating layer measured at 60°C is 30 gf/25mm to 140 gf/25mm.

The coating layer may be formed on one surface of the separator. In this case, the 90° peel strength between the separator and the coating layer measured at 60°C may be 30 gf/25mm to 140 gf/25mm, specifically 35 gf/25mm to 135 gf/25mm, more specifically 35 gf/25mm to 100 gf/25mm. If the 90° peel strength between the separator and coating layer measured at 60°C is too small, the adhesive force between the separator and the coating layer is weak. Therefore, as the separator heat-shrinks at high temperatures, the positive electrode and the negative electrode may cause a short circuit, thereby accompanying the fear of battery ignition. If the 90° peel strength between the separator and coating layer measured at 60°C is too large, the pores within the separator become excessively clogged with the particles contained in the coating layer, thereby being able to minimize problems of decreasing the lithium ion conductivity at the interface between the separator and the coating layer, and of increasing the cell resistance.

In the electrode assembly of one embodiment, the coating layer may make direct contact with the positive electrode. In this case, a separator is disposed between the coating layer and the negative electrode, so that the coating layer may not come into direct contact with the negative electrode. Therefore, the coating layer comes into direct contact with the negative electrode, so that an irreversible reaction in which the polymer in the coating layer is reductively decomposed during battery operation can be prevented, thereby preventing the problem of deteriorating the cycle life characteristics of a battery.

The ratio D₁/D₂ of the thickness (D₁) of the coating layer to the thickness (D₂) of the separator may be 0.1 to 4, specifically 0.2 to 3, and more specifically 0.3 to 2. If the D₁/D₂ is smaller than 0.1, the coating layer is too thin relative to the separator, and sufficient adhesive force between the separator and the coating layer is not ensured, so the separator may heat-shrink at high temperatures. If the D₁/D₂ is larger than 4, the coating layer is too thick relative to the separator and the lithium ion conductivity in the coating layer decreases, which may increase cell resistance.

On the other hand, when only a coating layer is disposed between the positive electrode and the negative electrode in the electrode assembly without a separator, the thickness of the coating layer must be made larger to prevent short circuits between the positive electrode and the negative electrode. However, when a coating layer and a separator are used together in an electrode assembly as in the above embodiment, the thickness of the coating layer can be formed thinner on the separator.

Specifically, the thickness (D₁) of the coating layer may be 30 *µ*m or less, preferably 1 *µ*m to 20 *µ*m, and more preferably 3 *µ*m to 15 *µ*m. If the thickness of the coating layer satisfies the above range, it is possible to ensure sufficient adhesive force between the separator and the coating layer to prevent the separator from shrinking at high temperatures, while preventing short circuits between the positive electrode and the negative electrode.

In the electrode assembly of the above embodiment, the coating layer on the separator may include at least one of polymer particles or ceramic particles having an absolute value of zeta potential of 25 mV or more.

At this time, the zeta potential of the polymer particles or ceramic particles is an index indicating the degree of surface charge of these particles, which can define the electrostatic repulsive force, dispersibility between particles, or the like. The polymer particles or ceramic particles having a large absolute value of the zeta potential can be uniformly dispersed on the separator to exhibit satisfactory and uniform coating properties, and a large number of fine and uniform pores that allow lithium ions to pass between these particles can be defined. **In** addition, due to the particles satisfying such a zeta potential, the coating layer can exhibit excellent impregnability for a flame retardant electrolyte containing a flame retardant solvent. Due to the combination of such a coating layer and a flame retardant electrolyte, a lithium secondary battery including the electrode assembly of one embodiment can exhibit superior electrochemical properties.

The zeta potential of the polymer particles or ceramic particles can be measured, for example, by an electrophoretic light scattering method using a dynamic light scattering device. At this time, the zeta potential of the polymer particles or ceramic particles can be measured in a state where the particles are dispersed in water or an alcohol-based solvent without a separate dispersant. In one specific example, the zeta potential can be measured in a state in which the polymer particles are dispersed at a concentration of 0.1 wt.% or less in a water solvent.

The absolute value of the zeta potential of the polymer particles or ceramic particles may be 25 mV or more, or 35 mV or more, or 45 mV or more, and 100 mV or less, or 90 mV or less, or 80 mV or less. Within such a range, satisfactory coating properties and porosity of the coating layer can be achieved, and high impregnation properties of the flame retardant electrolyte can be ensured, so that a uniform reaction can occur throughout the electrode, and thus, various performances such as capacity, output, and life characteristics of the lithium secondary battery can be improved.

Specific examples of the polymer particles may include at least one selected from the group consisting of polyethylene oxide(PEO), polyalkyl(meth)acrylate, polystyrene, polyvinyl chloride, polycarbonate, polysulfone, polyethersulfone, polyetherimide, polyphenylsulfone, polyamideimide, polyimide, polybenzimidazole, polyether ketone, polyphthalamide, polybutylene terephthalate, and polyethylene terephthalate.

Further, specific examples of the ceramic particles include at least one selected from the group consisting of boehmite (γ-AlO(OH)), Al₂O₃, TiO₂, Fe₂O₃, SiO₂, ZrO₂, Co₃O₄, SnO₂, NiO, ZnO, V₂O₅, and MnO.

In another example, the ceramic particles may be ceramic particles containing lithium and having ion conductivity, for example, lithium-containing oxide or lithium-containing phosphorus oxide particles. A specific example thereof include at least one selected from the group consisting of LAGP (lithium aluminum germanium phosphate)-based compound, LLZO (lithium lanthanum zirconium oxide)-based compound, LATP (lithium aluminum titanium phosphate)-based compound, LLZTO (lithium lanthanum zirconium tantalum oxide)-based compound, LLTO (lithium lanthanum titanium oxide)-based compound, LSTP (lithium silicon titanium phosphate)-based compound, LGPO (lithium germanium phosphate)-based compound, and lithium oxide (e.g. Li₂O).

The zeta potential of the polymer particles or ceramic particles can be adjusted not only by the type of each particle, but also by the particle size or surface properties of these particles. Thus, in order to achieve the zeta potential or dispersibility of the polymer particles or ceramic particles, the appropriate porosity of the coating layer, and the like, the polymer particles or ceramic particles may have an average particle size D₅₀ of 300 nm to 3 *µ*m, or 500 nm to 2.5 *µ*m, or 700 nm to 2 *µ*m.

In addition, in order to control the surface properties of the polymer particles or ceramic particles and thereby adjust the zeta potential, and the like, the polymer particles or ceramic particles may be contained in the coating layer in a state of being surface-treated with oxygen plasma or ion beam.

On the other hand, the coating layer may have a configuration that includes a polymer binder, and the polymer particles or ceramic particles dispersed on the polymer binder. At this time, the polymer binder used herein may be a polymer of the same type as the binder included in the electrode active material layer, and specific examples thereof may include polyvinylidene fluoride, polyvinyl alcohol, carboxymethylcellulose(CMC), starch, hydroxypropyl cellulose, regenerated cellulose, polyvinylpyrrolidone, polytetrafluoroethylene, polyethylene(PE), polypropylene, ethylene-propylene-diene monomer, sulfonated ethylene-propylene-diene monomer, nitrile-based rubber such as hydrogenated nitrile rubber, styrene-butadiene rubber, fluoro rubber, or the like, and a mixture or copolymer of two or more selected from these polymers can also be used. However, the specific composition of the polymer binder can be obviously determined by those skilled in the art in consideration of the type and characteristics of the polymer particles or ceramic particles, the method of forming the porous coating layer, and the like.

Moreover, considering the excellent coating properties and porosity of the above-mentioned porous coating layer and the excellent dispersibility of the particles, the coating layer may include the polymer binder : the polymer particles or ceramic particles in a weight ratio of 1:9 to 5:5, or 2:8 to 4:6.

The above-mentioned coating layer may have electrical insulating properties. Further, the coating layer may correspond to a porous insulating layer.

Further, the coating layer has a property that does not easily shrink even at high temperatures. Therefore, when the separator on which the coating layer is formed is applied to an electrode assembly, a short circuit between the positive electrode and the negative electrode can be prevented even in a high-temperature environment, thereby improving high-temperature safety of the electrode.

On the other hand, the coating layer may be formed by coating a composition for forming a coating layer containing the polymer particles or ceramic particles and a polymer binder onto a separator, followed by drying and rolling.

In this case, the solid content of the composition for forming the coating layer may be 19 wt.% to 25 wt.%, specifically 19 wt.% to 23 wt.%, and more specifically 19 wt.% to 21 wt.%. When the solid content of the composition for forming the coating layer satisfies the above numerical range, the composition for forming a coating layer may have a viscosity at a level capable of being coated on a separator.

The viscosity of the composition for forming the coating layer at 25°C may be, for example, 1000 cP to 10000 cP, specifically 2000 cP to 7000 cP, and more specifically 3000 cP to 5000 cP at room temperature. When the viscosity of the composition for forming a coating layer satisfies the above numerical range, the composition for forming a coating layer can be coated onto the separator in a uniform thickness.

On the other hand, in order to ensure that the coating layer can exhibit the above-mentioned peel strength range for the separator, such a coating layer can be formed by coating the composition for forming the coating layer on the separator, followed by drying and rolling. At this time, the drying can be performed, for example, at a temperature of 60 to 150°C for 0.5 to 12 hours. Additionally, after such a drying, the rolling may be performed, for example, 2 to 4 times, or 2 to 3 times, under pressure of 85 to 160 kg/cm², or 90 to 150 kg/cm². When the pressure during the rolling is greater than 100 kg/cm² and less than 160 kg/cm², the rolling is preferably performed two or three times. With the progress of such drying and rolling processes, the coating layer is formed on the separator to have a predetermined peel strength, so that a lithium secondary battery including an electrode assembly of one embodiment can exhibit improved high-temperature stability and excellent electrochemical properties.

On the other hand, a separator can be used without particular limitation as long as it is typically used as a separator in a lithium secondary battery. Particularly, a separator having high moisture-retention ability for an electrolyte as well as low resistance to the movement of electrolyte ions is preferable.

For example, as the separator, a porous polymer film including a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof can be used. Also, a typical porous non-woven fabric, for example, a non-woven fabric formed of glass fiber having a high melting point, polyethylene terephthalate fiber, or the like can be used as the separator.

The thickness D₂ of the separator may be 5 *µ*m to 20 *µ*m, preferably 5 *µ*m to 15 *µ*m, and more preferably 6 *µ*m to 13 *µ*m. If the thickness of the separator satisfies the above range, it is possible to prevent a short circuit between the positive electrode and the negative electrode while minimizing the cell resistance value. As a result, it is possible to prevent a decrease in the energy density of the lithium secondary battery and improve its life characteristics.

On the other hand, the positive electrode may include a positive electrode current collector and a positive electrode active material layer formed on the positive electrode current collector.

The positive electrode current collector is not particularly limited as long as it has conductivity without causing a chemical change in the battery. For example, the current collector may be formed of stainless steel, aluminum, nickel, titanium, calcinated carbon, or aluminum, or aluminum or stainless steel that is surface-treated with carbon, nickel, titanium, silver, or the like.

The positive electrode current collector may have a thickness of 3 *µ*m to 500 *µ*m , and may have fine protrusions and depressions formed on a surface thereof to enhance adherence of a positive electrode active material layer. For example, the positive electrode current collector can be used in various forms such as a film, a sheet, a foil, a net, a porous body, a foaming body, and a non-woven fabric structure.

The positive electrode active material layer may include a positive electrode active material, and may optionally further include a conductive material, a binder, and the like.

The positive electrode active material may be a compound capable of reversibly intercalating and deintercalating lithium, and specifically, it may include compounds such as lithium metal oxide or lithium metal phosphate containing lithium and at least one metal such as iron, cobalt, manganese, nickel or aluminum. More specifically, such compounds may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where 0<Z<2), etc.), lithium-nickel-cobalt-based oxide (e.g., LiNi_{1-Y1}Co_{Y1}O₂ (where 0<Y1<1, etc.), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2), etc.), or lithium-nickel-cobalt-transition metal (M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2, and s2 are atomic fractions of each independent elements, wherein 0<p2<1, 0<q2<1, 0<r2<1, 0<s2<1, and p2+q2+r2+s2=1), etc.), lithium iron phosphate (e.g., Li₁₊ₐFe₁₋ₓMₓ(PO_{4-b})X_{b} (where M is at least one selected from Al, Mg, and Ti, X is at least one selected from F, S and N, -0.5≤a≤+0.5, 0≤x≤0.5, 0≤b≤0.1), or the like, and any one thereof or a compound of two or more thereof may be used.

Among these compounds, in terms of the improvement of capacity characteristics and stability of the battery, the lithium metal oxide may include LiCoO₂, LiMnO₂, LiNiO₂, lithium nickel manganese cobalt oxide (e.g., Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}CO_{0.15})O₂ and Li(Ni_{0.8}Mn_{0.1}Co_{0.1})O₂, etc.), lithium nickel cobalt aluminum oxide (e.g., Li(Ni_{0.8}Co_{1.16}Al_{0.05})O₂, etc.), or lithium nickel manganese cobalt aluminum oxide (e.g., Li(Ni_{0.86}Co_{0.05}Mn_{0.07}Al_{0.02})O₂), or lithium iron phosphate (e.g., LiFePO₄) or the like, and any one alone or a mixture of two or more thereof may be used.

The positive electrode active material may be contained in an amount of 60 to 99 wt.%, preferably 70 to 99 wt.%, and more preferably 80 to 98 wt.% based on the total weight of the positive electrode active material layer.

The positive electrode conductive material is a component that further improves the conductivity of the positive electrode active material. Such a conductive material is not particularly limited as long as it has conductivity without causing a chemical change in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorinated carbon powder; conductive powder such as aluminum powder, and nickel powder; conductive whiskers such as zinc oxide whiskers and potassium titanate whiskers; conductive metal oxide such as titanium oxide; or polyphenylene derivatives, may be used.

Typically, the positive electrode conductive material may be contained in an amount of 1 to 20 wt.%, preferably 1 to 15 wt.%, and more preferably 1 to 10 wt.% based on the total weight of the positive electrode active material layer.

The positive electrode binder is a component that assists in the binding between the active material and the conductive material and in the binding with the current collector.

Examples of such a binder may include polyvinylidene fluoride, polyvinyl alcohol, carboxymethylcellulose(CMC), starch, hydroxypropylcellulose, regenerated cellulose, polyvinylpyrrolidone, polytetrafluoroethylene, polyethylene (PE), polypropylene, an ethylene-propylene-diene monomer, a sulfonated ethylene-propylene-diene monomer, a styrene-butadiene rubber, a fluoro rubber, various copolymers, and the like.

Typically, the positive electrode binder may be contained in an amount of 1 to 20 wt.%, preferably 1 to 15 wt.%, and more preferably 1 to 10 wt.% based on the total weight of the positive electrode active material layer.

On the other hand, the negative electrode may include a negative electrode current collector, and a negative electrode active material layer formed on the negative electrode current collector. Alternatively, the negative electrode may include a graphite electrode made of carbon(C). Alternatively, the negative electrode may contain lithium metal or may be a metal current collector itself.

**The negative** electrode current collector is not particularly limited as long as it has high conductivity without causing a chemical change in the battery, and, for example, copper, stainless steel, aluminum, nickel, titanium, calcinated carbon, copper or stainless steel that is surface-treated with one of carbon, nickel, titanium, silver, or the like, an aluminum-cadmium alloy, or the like may be used.

**The** negative electrode collector may generally have a thickness of 3 *µ*m to 500 *µ*m. Also, similar to the positive electrode collector, the negative electrode current collector may have fine protrusions and depressions formed on a surface thereof to enhance adherence of a negative electrode active material. For example, the negative electrode current collector may be used in various forms such as a film, a sheet, a foil, a net, a porous body, a foaming body, and a non-woven fabric structure.

**The** negative electrode active material layer may include a negative electrode active material, and may optionally further include a conductive material, a binder, and the like.

**The** negative electrode active material may comprise at least one selected from the group consisting of lithium metal, a carbon material capable of reversibly intercalating/deintercalating lithium ions, metals or alloys of lithium and these metals, a metal composite oxide, a material which may be doped and undoped with lithium, and a transition metal oxide.

As the carbon material capable of reversibly intercalating/deintercalating lithium ions, any carbon material may be used without particular limitation so long as it is a carbon-based negative electrode active material generally used in a lithium ion secondary battery, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature calcinated carbon) or hard carbon, mesophase pitch carbide, and fired cokes.

As the metals or alloys of lithium and these metals, metals selected from the group consisting of Cu, Ni, Na, K, Rb, Cs, Fr, Be, Mg, Ca, Sr, Si, Sb, Pb, In, Zn, Ba, Ra, Ge, Al and Sn or alloys of lithium and these metals may be used.

One selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃(0≤x≤1), LiₓWO₂(0≤x≤1) and SnₓMe₁₋ₓMe'_{y}O_{z} (Me: Mn, Fe, Pb, Ge; Me': Al, B, P, Si, Groups I, II and III elements of the periodic table, or halogen; 0<x≤1; 1≤y≤3; 1≤z≤8) can be used as the metal composite oxide.

The material, which may be doped and undoped with lithium, may include Si, SiOₓ (0<x≤2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include lithium-containing titanium composite oxide (LTO), vanadium oxide, lithium vanadium oxide, and the like.

The negative electrode active material may be contained in an amount of 60 to 99 wt.%, preferably 70 to 99 wt.%, and more preferably 80 to 98 wt.% based on a total weight of the negative electrode active material layer.

The negative electrode conductive material is a component that further improves the conductivity of the positive electrode active material. Such a conductive material is not particularly limited as long as it has conductivity without causing a chemical change in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorinated carbon powder; conductive powder such as aluminum powder, and nickel powder; conductive whiskers such as zinc oxide whiskers and potassium titanate whiskers; conductive metal oxide such as titanium oxide; or polyphenylene derivatives, may be used.

The negative electrode conductive material may be contained in an amount of 1 to 20 wt.%, preferably 1 to 15 wt.%, and more preferably 1 to 10 wt.% based on the total weight of the negative electrode active material layer.

The negative electrode binder is a component that assists in the binding between the negative electrode conductive agent, the negative electrode active material and the negative electrode current collector. Examples of such a binder may include polyvinylidene fluoride (PVDF), polyvinyl alcohol, starch, carboxymethylcellulose(CMC), starch, hydroxypropyl cellulose, regenerated cellulose, polyvinylpyrrolidone, polyethylene, polypropylene, ethylene-propylene-diene monomer, and a sulfonated ethylene-propylene-diene monomer, a styrene-butadiene rubber, a fluoro rubber, various copolymers thereof, and the like.

Typically, the negative electrode binder may be contained in an amount of 1 to 20 wt.%, preferably 1 to 15 wt.%, and more preferably 1 to 10 wt.% based on the total weight of the negative electrode active material layer.

When the metal itself is used without forming a negative electrode active material layer on the negative electrode, it can be manufactured by a method of physically joining, rolling, or depositing a metal on the metal thin film itself or the negative electrode current collector. As the deposition method, an electrical deposition method or a chemical vapor deposition method of the metal may be used.

For example, the metal thin film itself or the metal joined/rolled/deposited on the negative electrode current collector may include one type of metal selected from the group consisting of lithium (Li), nickel (Ni), tin (Sn), copper (Cu), and indium (In), or an alloy of two types thereof.

### <Lithium Secondary Battery>

Next, a lithium secondary battery according to another embodiment of the disclosure will be described.

Such a lithium secondary battery may include the above-mentioned electrode assembly and a flame retardant electrolyte. In this case, the electrode assembly is as described above.

The flame retardant electrolyte may be an electrolyte that does not volatilize easily and does not catch fire. Specifically, the flame retardant electrolyte may be defined as an electrolyte including a flame retardant solvent having a flash point of 100°C or more or having no flash point, and a lithium salt. At this time, the flame retardant solvent may encompass a substantially insoluble organic solvent having no flash point, and an organic solvent having a high flash point of 100°C or more, or 100 to 250°C, or 110 to 200°C, and a low volatility. The lithium secondary battery of other embodiments comprises a flame retardant electrolyte including such a flame retardant solvent and a lithium salt and thereby can exhibit excellent high-temperature stability. The flash point defining the flame retardant solvent can be measured using either a closed tester or open tester according to the standard methods of ASTM D3278.

On the other hand, the flame retardant electrolyte has a problem of lowering an impregnability of a separator for a lithium secondary battery (e.g., a polyolefin-based separator), and thus of reducing the mobility of lithium ions in the separator. However, when the coating layer formed on the separator includes polymer particles and/or ceramic particles with an absolute value of zeta potential of 25 mV or more, the coating layer is easily impregnated with the flame retardant electrolyte, thereby ensuring lithium ion mobility. Therefore, various electrochemical characteristics of a lithium secondary battery can be achieved excellently.

The flame retardant electrolyte may include a flame retardant solvent and a lithium salt. In this case, the flame retardant solvent can serve as a medium through which ions involved in the electrochemical reactions of the cell can move.

In specific examples, the flame retardant solvent may be an organic solvent having a functional group selected from the group consisting of a functional group that can contribute to low volatility and flame retardancy or non-flammability of organic solvents, for example, fluorine-containing functional groups such as sulfone-based functional groups and fluorine-substituted hydrocarbon groups, and phosphorus-containing functional groups such as phosphate groups or phosphonate groups, and nitrile-based functional groups, and one or more of such organic solvents can be mixed and used. More specifically, the flame retardant solvent may include at least one organic solvent selected from the group consisting of a sulfone-based compound, a nitrile-based compound, a phosphoric acid-based compound and a fluorine-substituted carbonate-based compound.

Among them, the sulfone-based compound may include at least one selected from the group consisting of a cyclic sulfone-based compound or a linear sulfone-based compound, and specifically, the sulfone-based compound may include at least one selected from the group consisting of sulfolane, tetramethylene sulfone, dibutyl sulfone, ethylvinyl sulfone, methylpropyl sulfone, ethyl-i-propyl sulfone, ethyl-i-butyl sulfone, i-propyl-i-butyl sulfone, i-propyl-s-butyl sulfone, and butyl-i-butyl sulfone.

Further, the nitrile-based compound may include at least one selected from the group consisting of acetonitrile, succinonitrile, adiponitrile, malononitrile, glutaronitrile, suberonitrile, and sebaconitrile.

Further, the phosphoric acid-based compound may include at least one selected from the group consisting of dimethyl methylphosphate, trimethyl phosphate, triethyl phosphate, tributyl phosphate, diethyl ethyl phosphate, dimethyl methyl phosphate, dimethyl(2-methoxyethoxy)methylphosphonate, diethyl(2-methoxyethoxy)methylphosphonate, and triphenyl phosphate.

Additionally, the fluorine-substituted carbonate-based compound may include at least one selected from the group consisting of bis(2,2,3,3-tetrafluoro-propyl)carbonate, methyl-2,2,2-trifluoroethyl carbonate, ethyl-2,2,2-trifluoroethyl carbonate, propyl-2,2,2-trifluoroethyl carbonate, methyl-2,2,2,2',2',2'-hexafluoro-i-propyl carbonate, ethyl-2,2,2,2',2',2'-hexafluoro-i-propyl carbonate, di-2,2,2-trifluoroethyl carbonate, 2,2,2-trifluoroethyl-N,N-dimethyl carbonate, hexafluoro-i-propyl-N,N-dimethyl carbonate, 4-(2,2,3,3-tetrafluoropropoxymethyl)-[1,3]-dioxolan-2-one, and bis(2,2,3,3-pentafluoro-propyl)carbonate.

On the other hand, the lithium salt is used as a medium for transferring ions in a lithium secondary battery. The lithium salt may include, for example, Li⁺ as a cation, and may comprise at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄-, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻ as an anion.

Specifically, the lithium salt may include a single material selected from the group consisting of LiCl, LiBr, Lil, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBETI (lithium bis(perfluoroethanesulfonyl) imide, LiN(SO₂CF₂CF₃)₂ and LiTFSI (lithium bis(trifluoromethanesulfonyl) imide, LiN(SO₂CF₃)₂), or a mixture of two or more thereof, but it is preferable to include LiN(SO₂CF₃)₂ from the viewpoint of excellent stability. In addition to these, the lithium salt commonly used in an electrolyte of a lithium secondary battery can be used without limitation.

The concentration of the lithium salt can be changed as appropriate within a generally usable range, but the lithium salt may be included in the flame retardant electrolyte at a concentration of 1M to 3M, preferably at a concentration of 1M to 2.5M, and more preferably at a concentration of 1M to 2M in the electrolyte in order to obtain an optimal effect of forming a film for preventing corrosion on the electrode surface. When the concentration of the lithium salt satisfies the above range, the effect of improving the cycle characteristics of the lithium secondary battery during high-temperature storage is sufficient, the viscosity of the flame retardant electrolyte is appropriate, so that the impregnation properties of the flame retardant electrolyte can be improved.

**The** above-mentioned lithium secondary battery can be manufactured by inserting the above-mentioned electrode assembly into a cylindrical battery case or a prismatic battery case, and then injecting the flame retardant electrolyte. Alternatively, the lithium secondary battery can be manufactured by impregnating the above-mentioned electrode assembly with a flame retardant electrolyte, and then putting the resulting product into a battery case and sealing the case.

As the battery case, one commonly used in this technical field can be adopted, and the outer shape according to the application use of the battery is not limited. For example, the battery case may be a cylindrical type, a prismatic type, a pouch type, a coin type, and the like, but is not limited thereto.

The lithium secondary battery according to another embodiment of the disclosure can be used not only as a battery cell used as a power source for a small-sized device, but also preferably as a unit battery for a medium- or large-sized battery module including a plurality of battery cells. Preferable examples of the medium-sized or large-sized device include an electric vehicle, a hybrid electric vehicle, a plug-in hybrid electric vehicle, and an energy storage system (ESS).

Hereinafter, the present disclosure will be described in more detail with reference to specific examples. However, the following examples are only exemplary embodiments for facilitating understanding of the invention, and are not intended to limit the scope of the invention. **It** would be obvious to those of ordinary skill in the art that various changes and modifications can be made to the invention without departing from the scope and spirit of the present disclosure, and it goes without saying that these changes and modifications fall within the scope of the appended claims.

### Example and Comparative Example

First, in the following examples, the zeta potential of polymer particles or ceramic particles was measured by an electrophoretic light scattering method using a dynamic light scattering device (product name: ELS-Z), in a state in which the polymer particles or ceramic particles were dispersed at a concentration of 0.1 wt.% or less in a water solvent at a temperature of 25°C.

Also, the flash point of the (flame retardant) organic solvent contained in the (flame retardant) electrolyte was measured by a closed tester according to the standard method of ASTM D93. Specifically, a sample container was filled with an organic solvent sample, the container was covered and closed with a lid, and then the sample container was heated at a constant rate according to the above standard method. During heating, the sample container was periodically opened to check whether a flame is generated, and the temperature at the time point of flame generation was measured as the flash point.

### Example 1

### (1) Production of Separator-Coating Layer Composite

A separator (thickness: 10 *µ*m) made of polyolefin was prepared.

Polymethyl methacrylate (PMMA) polymer particles having a zeta potential of -50 mV and an average particle size D₅₀ of 1 *µ*m, a hydrogenated nitrile rubber (H-NBR), and a polyvinylidene fluoride (PVDF) were put and dispersed in a weight ratio of 7: 1: 2 in N-methyl-2-pyrrolidone (NMP) solvent to prepare a composition for forming a coating layer (solid content: 21 wt.%, viscosity: 4000 cP).

The composition for forming a coating layer was coated onto a polyolefin separator (thickness: 10 *µ*m), then dried at 80° C for 1 hour, and rolled twice at a pressure of 100 kg/cm², thereby producing a separator-coating layer composite in which a coating layer with a thickness of 10 *µ*m was formed on one surface of the separator.

### (2) Preparation of electrode assembly

A copper (Cu) metal thin film with a thickness of 20 *µ*m was prepared as a negative electrode current collector, and a negative electrode active material layer containing artificial graphite as a negative electrode active material was formed on one surface of the copper metal thin film, thereby manufacturing a negative electrode with a thickness of 75 *µ*m.

An aluminum(Al) metal thin film with a thickness of 15 *µ*m was prepared as a positive electrode current collector, and a positive electrode active material layer containing Li(Ni_{0.8}Mn_{0.1}Co_{0.1})0₂ as a positive electrode active material was formed on one surface of the aluminum metal thin film, thereby manufacturing a positive electrode with a thickness of 60 *µ*m.

The coating layer formed on one surface of the separator was in contact with the positive electrode, and the other surface of the separator was in contact with the negative electrode to prepare an electrode assembly

### (3) Manufacture of lithium secondary battery

Li(N(SO₂CF₃)₂(LiFSI) was dissolved at a concentration of 1.5 M in a flame retardant solvent sulfolane (flash point: about 165°C) to prepare a flame retardant electrolyte. A lithium secondary battery was manufactured by housing the electrode assembly in a battery case and then injecting a flame retardant electrolyte therein.

### Example 2

A separator-coating layer composite was produced in the same manner as in Example 1, except that the composition for forming a coating layer was coated onto the separator, then dried at 80° C for 1 hour and rolled four times at a pressure of 100 kg/cm², thereby forming a coating layer with a thickness of 8 *µ*m on one surface of the separator.

An electrode assembly and a lithium secondary battery were manufactured in the same manner as Example 1, except that the separator-coating layer composite prepared by the above method was used.

### Example 3

A separator-coating layer composite was produced in the same manner as in Example 1, except that the composition for forming a coating layer was coated onto the separator, then dried at 80° C for 1 hour and rolled two times at a pressure of 90 kg/cm², thereby forming a coating layer with a thickness of 11 *µ*m on one surface of the separator.

An electrode assembly and a lithium secondary battery were manufactured in the same manner as Example 1, except that the separator-coating layer composite prepared by the above method was used.

### Example 4

A separator-coating layer composite was produced in the same manner as in Example 1, except that the composition for forming a coating layer was coated onto the separator, then dried at 80° C for 1 hour and rolled two times at a pressure of 150 kg/cm², thereby forming a coating layer with a thickness of 7 *µ*m on one surface of the separator.

An electrode assembly and a lithium secondary battery were manufactured in the same manner as Example 1, except that the separator-coating layer composite prepared by the above method was used.

### Comparative Example 1

A separator (thickness: 10 *µ*m) made of polyolefin was prepared.

An electrode assembly and a lithium secondary battery were manufactured in the same manner as Example 1, except that a separator in which a coating layer was not formed on one surface thereof was placed in contact between the positive electrode and the negative electrode.

### Comparative Example 2

A separator-coating layer composite was produced in the same manner as in Example 1, except that the composition for forming a coating layer was coated onto the separator, then dried at 80° C for 1 hour and rolled two times at a pressure of 60 kg/cm², thereby forming a coating layer with a thickness of 12 *µ*m on one surface of the separator.

An electrode assembly and a lithium secondary battery were manufactured in the same manner as Example 1, except that the separator-coating layer composite prepared by the above method was used.

### Comparative Example 3

A separator-coating layer composite was produced in the same manner as in Example 1, except that the composition for forming a coating layer was coated onto the separator, then dried at 80° C for 1 hour and rolled two times at a pressure of 200 kg/cm², thereby forming a coating layer with a thickness of 6 *µ*m on one surface of the separator.

An electrode assembly and a lithium secondary battery were manufactured in the same manner as Example 1, except that the separator-coating layer composite prepared by the above method was used.

### Comparative Example 4

A separator-coating layer composite was produced in the same manner as in Example 1, except that the composition for forming a coating layer was coated onto the separator, then dried at 80° C for 1 hour and rolled two times at a pressure of 80 kg/cm², thereby forming a coating layer with a thickness of 11.5 *µ*m on one surface of the separator.

An electrode assembly and a lithium secondary battery were manufactured in the same manner as Example 1, except that the separator-coating layer composite prepared by the above method was used.

### Comparative Example 5

A separator-coating layer composite was produced in the same manner as in Example 1, except that the composition for forming a coating layer was coated onto the separator, then dried at 80° C for 1 hour and rolled four times at a pressure of 150 kg/cm², thereby forming a coating layer with a thickness of 6.5 *µ*m on one surface of the separator.

An electrode assembly and a lithium secondary battery were manufactured in the same manner as Example 1, except that the separator-coating layer composite prepared by the above method was used.

### Experimental Example 1 - Evaluation of peel strength between separator and coating layer

The 90° peel strength between the separator and the coating layer was measured for the separator-coating layer composites prepared in Examples 1 to 4 and Comparative Examples 1 to 5.

Specifically, the separator-coating layer composites produced in Examples 1 to 4 and Comparative Examples 1 to 5 were cut into a width of 25 mm, then a double-sided tape was attached to a slide glass, and rolling was performed twice with a 2 kg roller. The average value of 90° peel strength was measured while peeling off the coating layer from the separator at a speed of 300 mm/min at a distance of 90 mm from the separator under a temperature condition of 60°C. The measurement results are shown in Table 1 below.

**[Table 1]**

| | 90° peel strength (gf/25mm) |
|---|---|
| Example 1 | 45 |
| Example 2 | 60 |
| Example 3 | 35 |
| Example 4 | 135 |
| Comparative Example 1 | - |
| Comparative Example 2 | 10 |
| Comparative Example 3 | 150 |
| Comparative Example 4 | 25 |
| Comparative Example 5 | 145 |

### Experimental Example 2 - Evaluation of High Temperature Safety of Lithium Secondary Battery

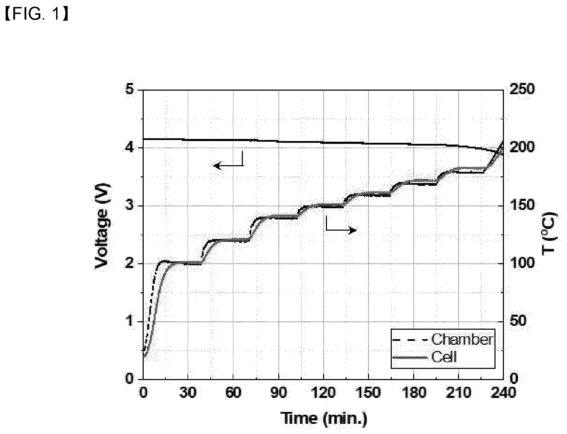

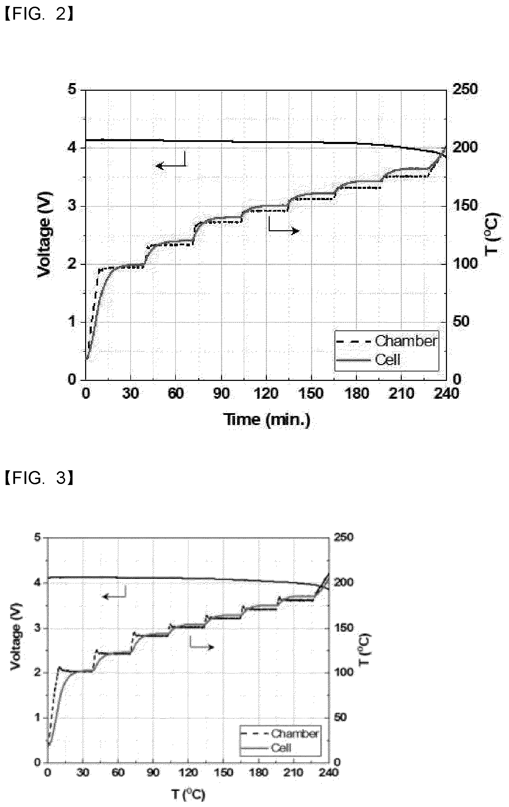

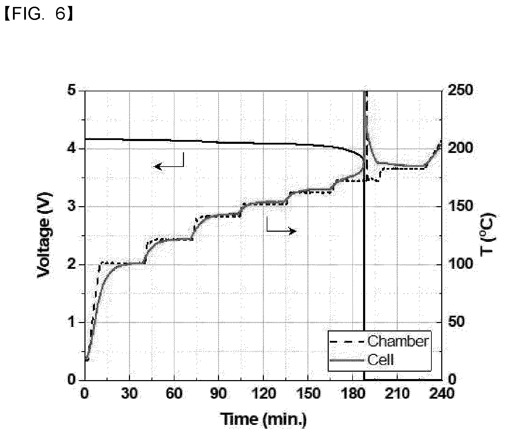

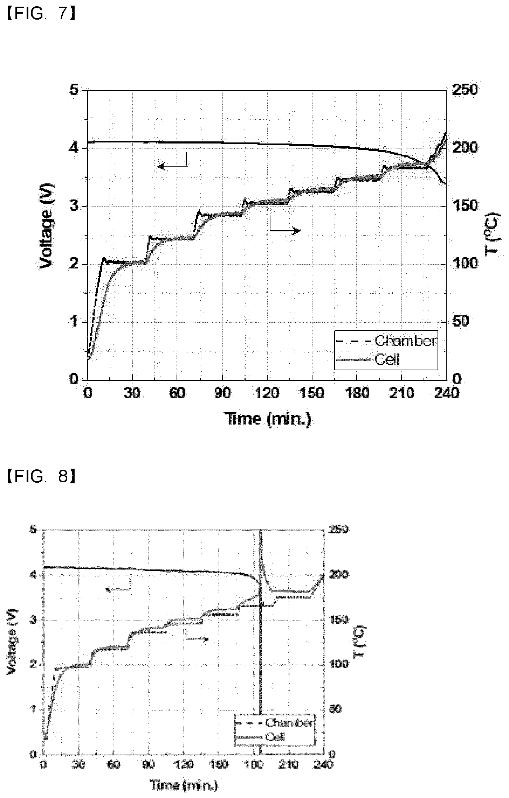

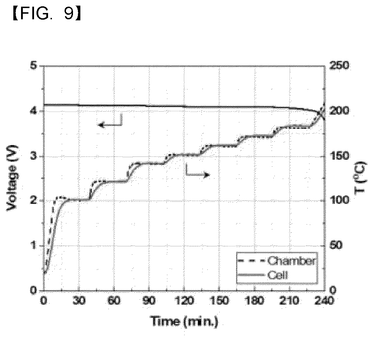

A hot box test was carried out on each lithium secondary battery manufactured in Example 1~4 and Comparative Example 1~5, and the results are shown in FIGS. 1 to 9. Specifically, the hot box test was carried out in such a way to raise the temperature at 10°C/min from 25°C, and hold the temperature at 100°C, 120°C, 140°C, 150°C, 160°C, 170°C and 180°C for 30 minutes each, and then raise the temperature at 2°C/min up to 200°C.

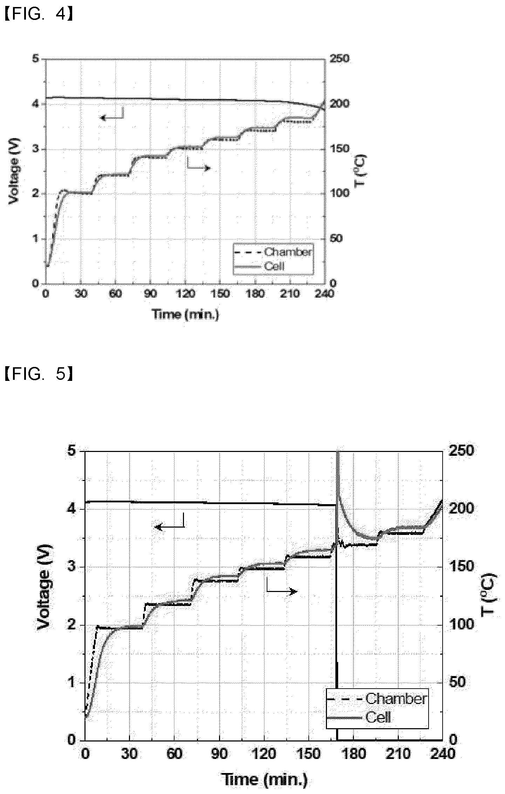

FIGS. 1 to 4 are graphs showing voltage-temperature changes over time of lithium secondary batteries manufactured in Examples 1 to 4, and FIGS. 5 to 9 are graphs showing the voltage-temperature change over time of the lithium secondary batteries manufactured in Comparative Examples 1 to 5.

In addition, the ignition temperatures of the lithium secondary batteries of Examples 1 to 4 and Comparative Examples 1 to 5 in the hot box test are shown in Table 2 below.

**[Table 2]**

| | Ignition start temperature (°C) |
|---|---|
| Example 1 | Non-ignited |
| Example 2 | Non-ignited |
| Example 3 | Non-ignited |
| Example 4 | Non-ignited |
| Comparative Example 1 | 170 |
| Comparative Example 2 | 173 |
| Comparative Example 3 | Non-ignited |
| Comparative Example 4 | 174 |
| Comparative Example 5 | Non-ignited |

As shown in FIGS. 1 to 9 and Table 2, it can be confirmed that in Examples 1 to 4, in which the 90° peel strength between the separator and the coating layer satisfies 30 to 140 gf/25mm, the separator does not heat-shrink due to the strong adhesive force between the separator and the coating layer even at high temperatures, so that the battery does not ignite, and the battery has excellent high-temperature safety.

On the other hand, it can be confirmed that for the case of Comparative Example 1 in which no coating layer is formed on the separator, and Comparative Examples 2 and 4 in which the 90° peel strength between the separator and the coating layer is lower than 30 gf/25mm, the separator heat-shrinks at high temperatures, and the positive electrode and the negative electrode are shortcircuited, so that the battery ignites at a temperature of 170°C or higher.

### Experimental Example 3 - Evaluation of Cell Resistance of Lithium Secondary Battery

Cell resistance values were measured for each lithium secondary battery manufactured in Examples 1 to 4 and Comparative Examples 1 to 5, and the results are shown in Table 3 below.

Specifically, the lithium secondary battery was charged to 50% SOC at a 0.1C constant current at 25°C, and then discharged at a 1.5C constant current for 10 seconds. From the voltage drop value that occurred at this time, the resistance value at 0.1 second and the resistance value between 0.1 second and 10 second were calculated.

**[Table 3]**

| | Cell resistance (mΩ) | |
|---|---|---|
| | 0.1 second resistance | 0.1 second ~ 10 second resistance |
| Example 1 | 38.2 | 11.6 |
| Example 2 | 40.7 | 13.3 |
| Example 3 | 39.8 | 12.9 |
| Example 4 | 45.7 | 14.8 |
| Comparative Example 1 | 37.4 | 10.7 |
| Comparative Example 2 | 39.3 | 12.2 |
| Comparative Example 3 | 61.8 | 17.9 |
| Comparative Example 4 | 39.4 | 12.6 |
| Comparative Example 5 | 58.9 | 16.6 |

As shown in Table 3, it can be confirmed that for the case of Examples 1 to 4, in which the 90° peel strength between the separator and the coating layer satisfies 30 to 140 gf/25mm, the cell resistance value increases compared to Comparative Example 1 in which no coating layer was formed on the separator, but the difference is not large.

On the other hand, it can be confirmed that for the case of Comparative Examples 3 and 5, in which the 90° peel strength between the separator and the coating layer is greater than 140 gf/25mm, the lithium ion conductivity at the interface between the separator and the coating layer is lower than in Examples 1 to 4, and so the cell resistance is high.

## Claims

1. An electrode assembly comprising:
a positive electrode;
a negative electrode;
a separator that is disposed between the positive electrode and the negative electrode; and
a coating layer that is formed on one surface of the separator and contains polymer particles or ceramic particles having an absolute value of zeta potential of 25 mV or more,
wherein a 90° peel strength between the separator and the coating layer is 30 gf/25mm to 140 gf/25mm.

2. The electrode assembly of claim 1, wherein:
the coating layer makes direct contact with the positive electrode.

3. The electrode assembly of claim 1, wherein:
a ratio D₁/D₂ of the thickness (D₁) of the coating layer to the thickness (D₂) of the separator is 0.1 to 4.

4. The electrode assembly of claim 1, wherein:
the thickness (D₁) of the coating layer is 30 *µ*m or less.

5. The electrode assembly of claim 1, wherein:
the thickness (D₂) of the separator is 5*µ*m to 20 *µ*m.

6. The electrode assembly of claim 1, wherein:
the polymer particles comprises at least one selected from the group consisting of polyethylene oxide(PEO), polyphenylene sulfide(PPS), polyalkyl(meth)acrylate, polystyrene, polyvinyl chloride, polycarbonate, polysulfone, polyethersulfone, polyetherimide, polyphenylsulfone, polyamideimide, polyimide, polybenzimidazole, polyether ketone, polyphthalamide, polybutylene terephthalate, and polyethylene terephthalate.

7. The electrode assembly of claim 1, wherein:
the ceramic particles comprises at least one selected from the group consisting of boehmite (γ-AlO(OH)), Al₂O₃, TiO₂, Fe₂O₃, SiO₂, ZrO₂, Co₃O₄, SnO₂, NiO, ZnO, V₂O₅, MnO, LAGP (lithium aluminum germanium phosphate)-based compound, LLZO (lithium lanthanum zirconium oxide)-based compound, LATP (lithium aluminum titanium phosphate)-based compound, LLZTO (lithium lanthanum zirconium tantalum oxide)-based compound, LLTO (lithium lanthanum titanium oxide)-based compound, LSTP (lithium silicon titanium phosphate)-based compound, LGPO (lithium germanium phosphate)-based compound, and lithium oxide.

8. The electrode assembly of claim 1, wherein:
the polymer particles or the ceramic particles have an average particle size (D₅₀) of 300nm to 3 *µ*m.

9. The electrode assembly of claim 1, wherein:
the coating layer comprises a polymer binder, and the polymer particles or ceramic particles dispersed on the polymer binder.

10. The electrode assembly of claim 9, wherein:
the coating layer comprises the polymer binder and the polymer particles or ceramic particles in a weight ratio of 1:9 to 5:5.

11. A lithium secondary battery comprising:
the electrode assembly of any one of claims 1 to 10; and
a flame-retardant electrolyte containing a flame retardant solvent and a lithium salt having a flash point of 100°C or more, or having no flash point.

12. The lithium secondary battery of claim 11, wherein:
the flame retardant solvent comprises at least one organic solvent having a functional group selected from the group consisting of a sulfone-based functional group, a fluorine-containing functional group, a phosphorus-containing functional group, and a nitrile-based functional group.

13. The lithium secondary battery of claim 11, wherein:
the flame retardant solvent comprises at least one organic solvent selected from the group consisting of a sulfone-based compound, a nitrile-based compound, a phosphoric acid-based compound, and a fluorine-substituted carbonate-based compound.
